# FASCICULE DE BREVET EUROPEEN

(11) **EP 3 688 707 B1**
(45) Date de publication et mention de la délivrance du brevet: **06.04.2022**
(21) Numéro de dépôt: 18773491.8
(22) Date de dépôt: 28.09.2018
(51) Int. Cl.: G06Q 20/32, G07F 7/08

(54) **DISPOSITIF D'ÉMISSION RÉCEPTION D'UN SIGNAL RADIO SANS FIL, PROCÉDÉ ET PROGRAMME CORRESPONDANT**
VORRICHTUNG ZUM SENDEN UND EMPFANGEN EINES DRAHTLOSEN FUNKSIGNALS, ENTSPRECHENDES VERFAHREN UND PROGRAMM
DEVICE FOR TRANSMITTING AND RECEIVING A WIRELESS RADIO SIGNAL, CORRESPONDING METHOD AND PROGRAM

(30) Priorité: 29.09.2017 FR 1759118
(43) Date de publication de la demande: 05.08.2020
(73) Titulaire: Banks and Acquirers International Holding, 75015 Paris (FR)
(72) Inventeur: MEGE, Laurent, 26800 Portes Les Valence (FR)
(74) Mandataire: Vidon Brevets & Stratégie
(86) Numéro de dépôt international: PCT/EP2018/076530
(87) Numéro de publication internationale: WO 2019/063825

(56) Documents cités:
- US-A1- 2009 215 394
- US-A1- 2016 321 645
- LEONG C Y ET AL: "Near Field Communication and Bluetooth Bridge System for Mobile Commerce", INDUSTRIAL INFORMATICS, 2006 IEEE INTERNATIONAL CONFERENCE ON, IEEE, PI, 1 août 2006 (2006-08-01), pages 50-55, XP031003325, 16-08-2006 ISBN: 978-0-7803-9700-2

## Description

### 1. Domaine de l'invention

L'invention se rapporte au domaine de l'émission réception de signal radio. L'invention se rapporte plus particulièrement à un dispositif d'émission réception de signal radio, effectuant un traitement des données transmises dans le signal.

### 2. Art antérieur

Au cours des dernières années, de nombreuses nouvelles méthodes pour effectuer des paiements par voie électronique ont vu le jour. Principalement, ces méthodes sont divisées en deux catégories. Il y a d'une part les méthodes dites « carte présente » et d'autre part les méthodes dites « cartes non présente ». Dans les méthodes dites « carte présente », une carte de paiement physique est utilisée pour effectuer le paiement. Il s'agit typiquement de la méthode mise en œuvre par un utilisateur lorsqu'il se rend dans un commerce et effectue un paiement par carte bancaire. Par exemple, un utilisateur souhaitant régler ses achats par carte bancaire dans une grande surface, utilise sa carte bancaire qu'il insère dans un terminal de paiement et saisit un code confidentiel (encore appelé code PIN). Le terminal de paiement effectue un certain nombre d'opérations pour réaliser le paiement, dont notamment une vérification du code PIN ou encore une communication avec un serveur de type bancaire (acquier) afin de vérifier les informations saisies. Alternativement, et de plus en plus fréquemment, l'interface sans contact (NFC) du terminal de paiement est utilisé : l'utilisateur appose sa carte sans contact sur le terminal de paiement (qui est également muni d'une interface sans contact) et cette interface est utilisée pour effectuer un échange d'information entre le terminal de paiement et la carte bancaire de l'utilisateur afin de réaliser une transaction bancaire et effectuer le paiement, comme dans le cas de l'insertion dans le lecteur de cartes). Ces deux méthodes sont mises en œuvre avec la possession de la carte bancaire.

Dans les méthodes dites « carte non présente », les données de la carte bancaire de l'utilisateur sont utilisées pour effectuer une transaction, sans toutefois que celle-ci ne soit présente. Cette méthode est principalement utilisée en ligne pour réaliser des achats auprès de sites de « e-commerce » (commerce en ligne). Typiquement, l'utilisateur saisit un certain nombre d'informations en lien avec la carte bancaire (nom du porteur, numéro de la carte, date de validité et code de vérification). Ces données sont utilisées pour réaliser une transaction « en ligne », immédiatement vérifiée par un ou plusieurs serveurs bancaires. Dans cette configuration, la carte n'est jamais physiquement présentée au marchant.

Le développement des smartphones et tablettes grandissant, de plus en plus de méthodes ont été divulguées pour permettre à ces terminaux de communication d'effectuer eux-aussi des paiements en utilisant les données de la carte bancaire de l'utilisateur. Ces méthodes sont typiquement des méthodes carte non présentes. En effet, tout sécurisé qu'il est, le terminal de communication n'est pas une carte bancaire et donc se contente d'utiliser les données de celle-ci pour effectuer le paiement.

Lorsqu'un terminal de communication est utilisé pour effectuer un paiement, deux types de situations différentes peuvent être rencontrées : soit le terminal de communication effectue un paiement pour une application installée sur le terminal de communication, soit il effectue un paiement avec un terminal de paiement. Dans le premier cas, les données de carte bancaires sont traitées soit en totalité soit en partie au sein du terminal de paiement en vue de réaliser une transaction de paiement pour l'achat d'un bien ou d'un service à distance (il s'agit d'un cas similaire ou identique au paiement sur un site de commerce en ligne ou l'utilisateur saisit les données bancaires, sauf que dans ce cas, le terminal de communication s'occupe seule de la fourniture de ces données au service d'achat en ligne : c'est typiquement le cas dans l'application « amazon^{™} » par exemple. Dans le deuxième cas, le terminal de communication se comporte comme une carte de paiement sans contact. Il transmet les données de carte bancaire comme s'il était lui-même une carte bancaire (avec plus ou moins d'adaptations en fonction de la méthode mise en œuvre). Le terminal de paiement, pour sa part, réceptionne ces données et les traitent comme si elles parvenaient d'une carte bancaire (à nouveau avec plus ou moins d'adaptations en fonction de la méthode mise en œuvre).

Pour pouvoir effectuer ces échanges de données, le terminal de paiement et le terminal de communication doivent partager une même interface de communication. Il s'agit majoritairement d'une interface de communication sans contact (NFC), utilisée à la fois par le terminal de paiement et le terminal de communication. Ce type d'interface est assez présent au sein de terminaux de paiement : en effet, ils intègrent généralement les interfaces requises dans les spécifications qui sont utilisées pour leur fabrication. L'interface de paiement de type NFC est définie par les spécifications *« EMV sans contact* », permettant de réaliser des paiements sans contact entre un terminal de paiement et une carte de paiement comprenant une interface sans contact.

En revanche, la présence d'une interface de communication sans contact n'est pas fortement répandue pour les terminaux de communication. En majorité, ces interfaces de communications sans contact sont réservées aux terminaux haut de gamme. Dès lors, par rapport au nombre de terminaux en circulation, peu de terminaux sont en mesure de communiquer avec un terminal de paiement pour effectuer des transactions sans contact. Il existe donc un besoin de permettre aux terminaux de communication, qui ne sont pas munis d'une interface de communication sans contact (par exemple NFC) de réaliser une communication avec des terminaux (par exemple de paiement) qui sont munis d'une telle interface.

On peut trouver des exemples de l'art antérieur dans: US 2009/215394, US 2016/321645 et LEONG C Y ET AL: "Near Field Communication and Bluetooth Bridge System for Mobile Commerce",INDUSTRIAL INFORMATICS, 2006 IEEE INTERNATIONAL CONFERENCE ON, IEEE, PI, 1 août 2006 (2006-08-01), pages 50-55, XP031003325,

### 3. Résumé

La présente technique permet de solutionner, au moins en partie, ce problème lié à la nécessité de disposer d'une pluralité d'interfaces de communication au sein de dispositifs dont certains peuvent manquer de telles interfaces.

L'invention est définie par les revendications indépendantes. Les revendications dépendantes définissent les modes préférés de réalisation.

### Figures

- la figure 1 illustre le procédé de traitement mis en œuvre par le dispositif adaptateur de l'invention ;
- la figure 2 présente le dispositif adaptateur de l'invention, dans une vue schématisée ;
- la figure 3 présente un mode de réalisation du dispositif adaptateur de l'invention ;
- la figure 4 présente un exemple de positionnement du dispositif adaptateur de l'invention selon un premier mode de réalisation ;
- la figure 5 présente un exemple de positionnement du dispositif adaptateur de l'invention selon un premier mode de réalisation.

### 5. Description

### 5.1. Rappel du principe

Le principe général de l'invention consiste, dans le cadre d'une communication entre deux terminaux ne disposant pas d'une technologie de communication sans fil commune, à munir l'un des deux terminaux d'un dispositif adaptateur, également appelé dans la présente dispositif passerelle d'émission réception de signal. Cet adaptateur a pour fonction d'effectuer une transformation de signal. L'adaptateur est plus particulièrement destiné à permettre une communication entre un terminal disposant d'une interface de communication NFC et un terminal disposant d'une interface de communication BLE (pour « Bluetooth Low Energy »). La technique, d'une manière générale est également applicable à la technologie Zigbee. On peut imaginer disposer d'un dispositif adaptateur NFC/Zigbee ou encore Bluetooth/Zigbee (à la condition de disposer d'une alimentation adéquate, comme par exemple un stockage d'énergie, comme explicité ci-après).

Ce dispositif adaptateur peut prendre plusieurs formes différentes. Une forme adéquate, décrite plus en détail par la suite, consiste en une pastille, par exemple en plastique surmoulé, qui peut être placée en regard d'une antenne de communication sur l'un des deux terminaux. D'une manière générale le dispositif adaptateur, comprend :
- une première interface d'émission réception (I1) de signal radio selon une première technologie de transmission ;
- une deuxième interface d'émission réception (I2) de signal radio selon une deuxième technologie de transmission ;
- un étage d'adaptation (ADAPT) comprenant des moyens d'extraction de données de signaux en provenance de la première interface et/ou de la deuxième interface.

Le dispositif réalise une transformation du signal émis par le premier terminal en un signal à destination du deuxième terminal.

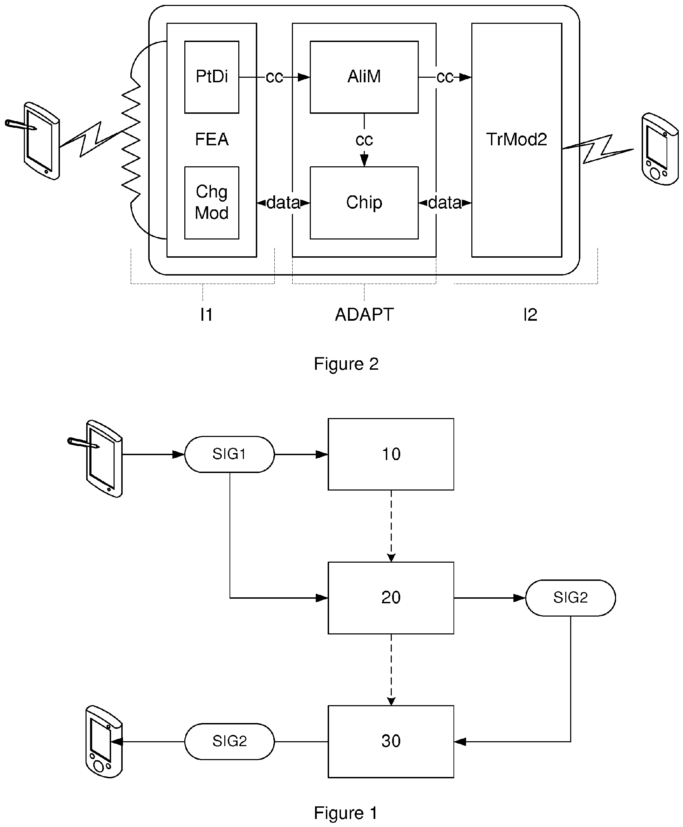

Ainsi, l'adaptateur en lui-même comprend, en son sein, des composants électroniques nécessaires et suffisants pour mettre en œuvre la méthode d'adaptation suivante (figure 1) :
- capter (10) d'un premier signal rayonnant (sans fil) (Sig1) émis par un terminal selon un premier format de communication ;
- effectuer une transformation (20) de ce premier signal en un deuxième signal (Sig2), selon un deuxième format de communication ; et
- émettre (30) ce deuxième signal (Sig2) à destination du terminal de communication destinataire.

Comme cela est détaillé par la suite, dans au moins un mode de réalisation, l'énergie contenue dans le premier signal de communication est utilisée (au moins en partie) pour alimenter l'adaptateur le temps de réaliser les étapes de captation, de transformation et d'émission. En d'autre termes, le dispositif adaptateur est autonome énergétiquement. Lorsqu'il n'est pas apposé ou approché du terminal émetteur (qui fournit de l'énergie sous la forme d'un signal), il est inerte. Il n'entre en fonctionnement que sur réception d'un signal suffisamment énergétique pour que l'étage d'adaptation puisse transformer le premier signal radio en un deuxième signal radio.

Ainsi, dans un premier aspect, comme précédemment explicité, l'invention se rapporte à un dispositif, par exemple un dispositif amovible qui est adjoint à un terminal, ou encore adhésif, comme une étiquette.. Ce dispositif fait office de passerelle entre un premier terminal, par exemple un terminal de paiement, qui dispose d'une première interface de communication sans fil (par exemple NFC) et un deuxième terminal (par exemple un terminal de communication de type smartphone ou tablette) qui dispose d'une deuxième interface de communication sans fil (par exemple Bluetooth). Nativement, ces deux terminaux ne sont pas en mesure de communiquer l'un avec l'autre. Les première et deuxième interfaces de communication étant incompatibles. À l'aide du dispositif objet de l'invention, un signal émis par un premier terminal est transformé en un signal reconnaissable par le deuxième terminal.

Dans un mode de réalisation spécifique de l'invention, le dispositif adaptateur est en charge de la transformation d'un signal émis par un terminal selon un format NFC en un signal Bluetooth, compréhensible par un terminal disposant d'une interface Bluetooth. Pour ce faire, comme exposé par la suite, le dispositif adaptateur comprend des moyens nécessaires à la transformation. Inversement, le dispositif adaptateur peut comprendre également des moyens de transformation inverse, d'un signal émis par un terminal de communication émettant en Bluetooth vers un signal pouvant être capté et compris par un terminal de communication (ou de paiement) disposant d'une interface NFC.

Les moyens mis en œuvre dans ce mode de réalisation sont décrits en relation avec la figure 2. Le dispositif adaptateur (ABr) comprend un front end analogique (FEA) comprenant une antenne (Ant) en charge de la réception du signal NFC, un composant de transformation de courant (PtDi) et un composant de modulation de charge (ChgMod). Ce front end analogique (FEA) constitue la première interface d'émission réception dans ce mode de réalisation. À l'aide de ces composants le front end analogique (FEA) est en mesure de produire un courant continu (cc) à partir du signal reçu et de transmettre les données du signal à un microcontrôleur (Chip). Le microcontrôleur (Chip) est interfacé au module de gestion d'alimentation (AliM), recevant l'alimentation en courant continu (cc) en provenance du composant de transformation de courant (PtDi). La fonction du microcontrôleur (chip) est de traiter les données reçues soit en provenance du premier terminal soit en provenance du deuxième terminal pour réaliser une adaptation de format et/ou une adaptation de codage, etc. Dans ce mode de réalisation, le microcontrôleur (Chip) et le module de gestion d'alimentation (AliM) constituent l'étage d'adaptation. Les données sont traitées par un transmetteur (TrMod2) pour être transmises et/ou reçues en provenance du deuxième terminal de communication. Dans ce mode de réalisation, le transmetteur (TrMod2) et son antenne de transmission constituent la deuxième interface d'émission réception. En fonction des modes de réalisation, le transmetteur peut prendre en charge plus ou moins de traitements liés au protocole de communication de la norme en question.

La transformation des signaux comprend le traitement de données composantes ce signal. Les données sont par exemple bufférisées (mise en mémoire tampon) pour être découpées ou redéfinies en fonction du format cible (premier ou deuxième format, selon le sens de la communication) et être réémises correctement en fonction de ce format. La transformation est tout ou parie mise en œuvre par le microcontrôleur et/ou par un autre moyen de transmission intégré au dispositif adaptateur, comme par exemple le transmetteur (TrMod2).

Dans un mode de réalisation décrit par la suite, le microcontrôleur (chip) traite les données du signal NFC, pour les transformer en données de signal Bluetooth. Inversement, il reçoit les données Bluetooth et la transforme en données NFC. Le microcontrôleur (chip) est connecté à un transmetteur Bluetooth, ce transmetteur Bluetooth étant également connecté au module de gestion d'alimentation (AliM) afin de recevoir une alimentation en courant continu (cc) issu indirectement de l'énergie transportée par le signal reçu en provenance du premier terminal de communication.

Ainsi, dans ce mode de réalisation, le dispositif adaptateur est alimenté par le signal NFC. Ce signal NFC est émis avec une fréquence de l'ordre de @13.56Mhz. Le courant généré par un signal NFC (par le champ électromagnétique généré pour produire le signal NFC) est de l'ordre de la dizaine à la centaine de milliampères. Ainsi, le composant de transformation de courant, qui transforme le courant alternatif du signal NFC en un courant continu est en mesure de délivrer au module de gestion d'alimentation, un courant de l'ordre de quelques dizaines de milliampères, tant que la transmission NFC est mise en œuvre. Le microcontrôleur et le transmetteur Bluetooth consomment à eux deux environ 5 à 10 milliampères. Dès lors, grâce au signal NFC, le dispositif adaptateur est en mesure de réaliser les traitements de réception, de conversion et d'émission tant que La porteuse à 13.56Mhz du signal NFC est générée (c'est-à-dire tout au long du dialogue NFC effectué par le premier terminal (celui qui dispose de l'interface NFC), c'est-à-dire tout au long de la génération de la porteuse NFC. En effet, une particularité de la technologie NFC est de générer, tout au long de la transmission de données, une porteuse à destination du dispositif NFC avec lequel le terminal souhaite communiquer. C'est par exemple le cas pour un terminal de paiement. En tout état de cause, le dispositif de l'invention est autonome : il ne nécessite pas d'alimentation extérieur, pas plus qu'il ne nécessite d'utiliser une alimentation interne de type batterie.

Un dispositif selon l'invention peut être mis en œuvre avec d'autres technologies de transmission de données pour autant que l'énergie générée lors de la transmission d'un signal d'une des technologies employées (pour le terminal 1 ou le terminal 2) soit suffisante pour alimenter un convertisseur, que ce soit de manière continue ou en rafale. Le principe général reste le même : récupération de l'énergie sous forme d'un courant alternatif, conversion de ce courant en courant continu, éventuellement stockage de l'énergie électrique obtenue (par exemple à l'aide d'un ou plusieurs condensateurs), traiter les données reçues et transmettre des données via le deuxième canal de communication. L'utilisation d'un condensateur (pour emmagasiner une charge électrique), n'est pas nécessaire lorsque premier signal est émis en continu tout au long de la transmission. En revanche, lorsque le premier signal est émis en rafale (pour des raisons d'économie d'énergie en mode surveillance), et qu'il est donc interrompu dans le temps, l'utilisation de moyens de stockage de l'énergie électrique peut être intéressante afin de faire en sorte que le dispositif adaptateur puisse fonctionner relativement indépendamment de ces rafales.

### 5.2. Mode de réalisation particulier

Dans cette section, on décrit un mode de réalisation spécifique, adapté à une mise en œuvre entre un terminal de paiement muni d'une interface NFC et un terminal de communication muni d'une interface Bluetooth. Les différentes caractéristiques techniques sont les suivantes.

### Alimentation :

L'interface NFC sans contact à 13.56Mhz intégrée dans les terminaux de paiement est compatible « EmvCo ». Cette spécification décrit les niveaux de champs minimum et maximum dans un volume de référence. Le champ généré permet une télé-alimentation de carte sans contact à crypto processeur jusqu'à quatre centimètres de distance. Le courant consommé par le dispositif adaptateur NFC/Bluetooth est d'environ : 5 mA pour l'émission et 5 mA pour la réception. Ce qui et très inférieur au courant pouvant être obtenu avec l'interface NFC. Le composant de transformation de courant détecte la porteuse haute fréquence pour générer une tension d'alimentation continue pour alimenter le composant NFC/Bluetooth.

L'application client du terminal de paiement permet :
- Le contrôle total du champ (de son ouverture à sa fermeture) ;
- La génération de trames propriétaires pour le pilotage du dispositif adaptateur.

La porteuse à 13.56Mhz est générée continuellement pendant toute la durée du dialogue (transaction) par l'application client du terminal de paiement.

### Dialogue NFC :

Le dialogue s'appuie, pour la partie bas niveau, sur la norme 14443 (sur laquelle s'appuie la spécification EmvCo) :
Voie montante (lecteur vers bridge) :
   - modulation d'amplitude suivant les deux types de modulation décrits dans la norme ;
   - retromodulation : modulation de charge par variation de l'impédance du secondaire du transformateur à air créé par l'antenne du terminal de paiement et l'antenne NFC du dispositif adaptateur.
*Microcontroller :*
   Permet l'interface numérique entre la tête analogique NFC et la tête analogique Bluetooth, notamment la mise en mémoire tampon des données à transférer, le codage/décodage propriétaire des trames NFC, le codage décodage des trames Bluetooth.
*Dialogue Bluetooth :*
   L'antenne Bluetooth est intégrée au dispositif adaptateur. Les modulations numériques seront celles préconisées par la norme Bluetooth.

Dans ce mode de réalisation, le dispositif adaptateur est destiné à permettre l'établissement d'un lien de communication entre un terminal de paiement disposant d'une interface sans fil NFC et un terminal de communication disposant d'une interface sans fil Bluetooth. L'objectif est de pouvoir mener une transaction de paiement entre ces deux terminaux. On ne décrit pas ici les adaptations protocolaires nécessaires pour permettre une compréhension mutuelle des deux dispositifs. Ces adaptations protocolaires peuvent être réalisées indépendamment soit du côté du terminal de communication soit du côté du terminal de paiement soit directement au sein du dispositif adaptateur. Dans ce mode de réalisation, on suppose que le dispositif adaptateur comprend un microcontrôleur capable d'effectuer un traitement des données reçues et/ou une mise en mémoire tampon de ces données.

### 5.3. Application au dialogue entre un terminal de paiement et un terminal de communication

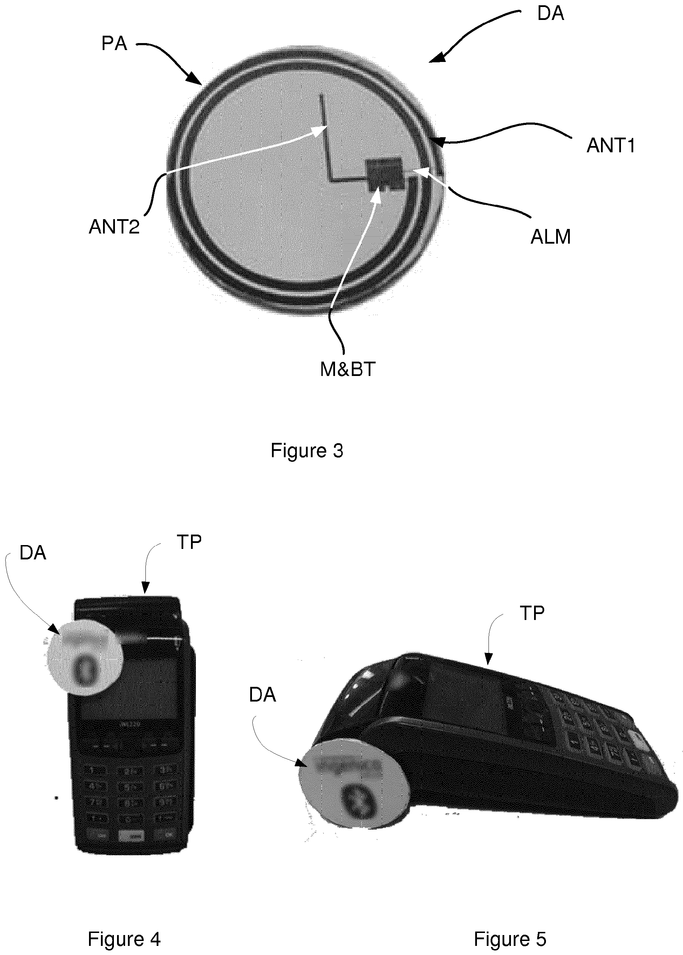

Dans ce mode de réalisation, présenté en relation avec la figure 3, le dispositif adaptateur (DA) prend la forme d'une pastille (PA), par exemple en matière plastique, d'une épaisseur de l'ordre du millimètre et d'un diamètre de l'ordre de quelques centimètres. Le diamètre est fonction de la taille de l'antenne spiralée (ANT1) destinée à recevoir le signal NFC. Il est par exemple de l'ordre de un à quatre centimètres dans un exemple de réalisation. L'antenne spiralée NFC (ANT1) occupe le pourtour de la pastille (PA). Elle capte le signal (et l'énergie de ce signal) et alimente (ALM) l'ensemble du dispositif adaptateur, dont le microcontrôleur et le transmetteur Bluetooth (M&BT) qui forment ici un seul et même ensemble. Le signal Bluetooth est émis par l'intermédiaire de l'antenne dédiée (ANT2).

Le dispositif adaptateur est placé sur le terminal de paiement, par exemple au moyen d'un adhésif ou d'une bande de type scratch. Le dispositif est placé à proximité de l'endroit où se trouve l'antenne NFC du terminal de paiement afin de maximiser l'énergie reçue de la part du terminal de paiement et optimiser la réception des données. Cependant, les « lignes » de champ magnétique permettent l'alimentation de module basse consommation en périphérie de l'antenne intégrée dans le terminal de paiement. En effet ces « lignes » ne s'arrêtent pas au volume de référence définie par la norme, mais restent actives tout autour de l'antenne. Il est donc possible d'alimenter le bridge sur le côté d'un produit, surtout avec la faible consommation demandé par l'émetteur Bluetooth. Les deux figures 4 et 5 illustrent deux emplacements pouvant convenir à l'utilisation du dispositif adaptateur de l'invention. Dans l'exemple de la figure 4, le dispositif adaptateur (DA) est positionné en face avant du terminal de paiement (TP), à proximité de l'écran d'affichage de ce terminal. Cette position permet d'approcher le terminal de communication de l'écran, comme on le fait quand on souhaite effectuer un paiement sans contact. Dans l'exemple de la figure 5, le dispositif adaptateur (DA) est positionné sur le côté du terminal de paiement (TP) : l'avantage de ce positionnement est de ne pas gêner l'affichage sur l'écran. Le terminal de communication est alors approché du dispositif adaptateur (DA) pour effectuer un paiement.

Le dispositif adaptateur peut être placé et retirer en fonction des besoins par le commerçant qui l'utilise. Par exemple, le dispositif peut n'être mis en place que lorsqu'il est nécessaire d'effectuer une transaction de paiement en utilisant un terminal de communication d'un client, ledit terminal ne disposant que d'une interface de communication de type Bluetooth.

## Revendications

1. Dispositif d'émission réception d'un signal radio sans fil, dispositif comprenant :
- une première interface d'émission réception (I1) de signal radio selon une première technologie de transmission de type NFC ;
- une deuxième interface d'émission réception (I2) de signal radio selon une deuxième technologie de transmission, de type Bluetooth ;
- un étage d'adaptation (ADAPT) comprenant des moyens d'extraction de données de signaux (chip) en provenance de la première interface et/ou de la deuxième interface, dispositif d'émission réception **caractérisé en ce qu'**il prend la forme d'une pastille (PA) d'une épaisseur de l'ordre du millimètre et d'un diamètre compris entre 1 et quatre centimètres, et dans lequel l'antenne NFC (ANT1) est spiralée et occupe le pourtour de la pastille (PA), le signal Bluetooth étant émis par l'intermédiaire de l'antenne dédiée (ANT2).

2. Dispositif selon la revendication 1, **caractérisé en ce que** l'étage d'adaptation comprend en outre des moyens de gestion de l'alimentation électrique (Alim).

3. Dispositif selon la revendication 2, **caractérisé en ce que** les moyens de gestion de l'alimentation électrique comprennent au moins un composant de transformation d'un courant alternatif, issu d'un signal reçu au niveau de ladite première interface d'émission réception, en un courant continu.

4. Dispositif selon la revendication 1, **caractérisé en ce que** l'étage d'adaptation comprend au moins un microcontrôleur.

5. Dispositif selon la revendication 4, **caractérisé en ce que** le microcontrôleur est alimenté par l'intermédiaire d'un composant de transformation d'un courant alternatif, issu d'un signal reçu au niveau de ladite première interface d'émission réception, en un courant continu.

6. Dispositif selon la revendication 1, **caractérisé en ce que** l'étage d'adaptation comprend au moins un microprocesseur de transmission réception couplé à ladite deuxième interface.

7. Dispositif selon la revendication 1, **caractérisé en ce que** la première interface d'émission réception de signal radio selon une première technologie de transmission est une interface NFC.

8. Dispositif selon la revendication 1, **caractérisé en ce que** la deuxième interface d'émission réception de signal radio selon la deuxième technologie de transmission est une interface Bluetooth.

9. Procédé de traitement d'un premier signal radio émis par un premier terminal à destination d'un deuxième terminal, signal radio émis selon une première technologie de transmission de signal, procédé **caractérisé en ce qu'**il est mis en œuvre par un dispositif d'émission réception selon l'une des revendications 1 à 8, procédé **caractérisé en ce qu'**il comprend les étapes suivantes consistant à :
- placer le dispositif d'émission réception à proximité de l'endroit où se trouve l'antenne NFC;
- capter (10) le premier signal radio émis par le premier terminal selon un premier format de communication ;
- effectuer (20) une transformation de ce premier signal en un deuxième signal, selon un deuxième format de communication ; et
- émettre (30) ce deuxième signal à destination du deuxième terminal.

## Patentansprüche

1. Drahtlose Vorrichtung zum Senden/Empfangen eines Funksignals, Vorrichtung umfassend:
- eine erste Sende-/Empfangsschnittstelle (I1) eines Funksignals nach einer ersten Übertragungstechnologie vom Typ NFC,
- eine zweite Sende-/Empfangsschnittstelle (I2) eines Funksignals nach einer zweiten Übertragungstechnologie vom Typ Bluetooth,
- eine Anpassungsstufe (ADAPT), die Mittel zum Extrahieren von Daten aus Signalen (chip) aufweist, die von der ersten Schnittstelle und/oder von der zweiten Schnittstelle stammen,
Vorrichtung zum Senden/Empfangen, **dadurch gekennzeichnet, dass** sie die Form eines Chips (PA) mit einer Dicke in der Größenordnung von einem Millimeter und einem Durchmesser zwischen 1 und vier Zentimetern annimmt, und wobei die NFC-Antenne (ANT1) spiralförmig ist und den Umfang des Chips (PA) einnimmt, wobei das Bluetooth-Signal durch die dedizierte Antenne (ANT2) übertragen wird.

2. Vorrichtung nach Anspruch 1, **dadurch gekennzeichnet, dass** die Anpassungsstufe ferner Mittel zum Verwalten der Stromversorgung (Alim) aufweist.

3. Vorrichtung nach Anspruch 2, **dadurch gekennzeichnet, dass** die Mittel zum Verwalten der Stromversorgung mindestens eine Komponente zum Umwandeln eines Wechselstroms, der von einem Signal stammt, das an der ersten Sende-/Empfangsschnittstelle empfangen wird, in einen Gleichstrom aufweist.

4. Vorrichtung nach Anspruch 1, **dadurch gekennzeichnet, dass** die Anpassungsstufe mindestens einen Mikrocontroller aufweist.

5. Vorrichtung nach Anspruch 4, **dadurch gekennzeichnet, dass** der Mikrocontroller durch eine Komponente zum Umwandeln eines Wechselstroms, der von einem Signal stammt, das an der ersten Sende-/Empfangsschnittstelle empfangen wird, in einen Gleichstrom, gespeist wird.

6. Vorrichtung nach Anspruch 1, **dadurch gekennzeichnet, dass** die Anpassungsstufe mindestens einen Mikrocontroller zum Senden/Empfangen, der mit der zweiten Schnittstelle verbunden ist, aufweist.

7. Vorrichtung nach Anspruch 1, **dadurch gekennzeichnet, dass** die erste Sende-/Empfangsschnittstelle eines Funksignals nach einer ersten Übertragungstechnologie eine NFC-Schnittstelle ist.

8. Vorrichtung nach Anspruch 1, **dadurch gekennzeichnet, dass** die zweite Sende-/Empfangsschnittstelle eines Funksignals nach der zweiten Übertragungstechnologie eine Bluetooth-Schnittstelle ist.

9. Verfahren zum Verarbeiten eines ersten Funksignals, das von einem ersten Endgerät an ein zweites Endgerät gesendet wird, Funksignal, das nach einer ersten Signalübertragungstechnologie gesendet wird, Verfahren, **dadurch gekennzeichnet, dass** es von einer Vorrichtung zum Senden/Empfangen nach einem der Ansprüche 1 bis 8 umgesetzt wird, Verfahren, **dadurch gekennzeichnet, dass** es die folgenden Schritte aufweist, die darin bestehen:
- die Vorrichtung zum Senden/Empfangen in der Nähe der Stelle anzuordnen, wo sich die NFC-Antenne befindet,
- das erste Funksignal, das von dem ersten Endgerät nach einem ersten Kommunikationsformat gesendet wird, zu erfassen (10),
- eine Umwandlung dieses ersten Signals in ein zweites Signal nach einem zweiten Kommunikationsformat durchzuführen (20) und
- dieses zweite Signal an ein zweites Endgerät zu senden (30).

## Claims

1. Device for transmitting/receiving a wireless radio signal, device comprising:
- a first interface (I1) for transmitting/receiving a radio signal according to a first transmission technology of NFC type;
- a second interface (12) for transmitting/receiving a radio signal according to a second transmission technology of Bluetooth type;
- an adaptation stage (ADAPT) comprising means for extracting data from signals (chip) coming from the first interface and/or the second interface;
device for transmitting/receiving **characterized in that** it takes the form of a chip (PA) with a thickness of about one millimeter and a diameter between one and four centimeters, and in which the NFC antenna (ANT1) is coiled and occupies the perimeter of the chip (PA), the Bluetooth signal is transmitted through the dedicated antenna (ANT2).

2. Device according to claim 1, **characterized in that** the adaptation stage further comprises means for managing the electrical power supply (Alim).

3. Device according to claim 2, **characterized in that** the means for managing the electrical power supply comprise at least one component for converting an alternating current, coming from a signal received at said first transmitting/receiving interface, into a direct current.

4. Device according to claim 1, **characterized in that** the adaptation stage comprises at least one microcontroller.

5. Device according to claim 4, **characterized in that** the microcontroller is powered by means of a component for the conversion of an alternating current, coming from a signal received at said first transmitting/receiving interface, into a direct current.

6. Device according to claim 1, **characterized in that** the adaptation stage comprises at least one transmitting/receiving microprocessor coupled to said second interface.

7. Device according to claim 1, **characterized in that** the first interface for transmitting/receiving radio signals according to a first transmission technology is an NFC interface.

8. Device according to claim 1, **characterized in that** the second interface for transmitting/receiving radio signals according to the second transmission technology is a Bluetooth interface.

9. Method for processing a first radio signal transmitted by a first terminal addressed to a second terminal, radio signal transmitted according to a first signal transmission technology, method **characterized in that** it is implemented by a transmitting/receiving device according to any one of the claims 1 to 8, method **characterized in that** it comprises the following steps consisting in:
- Placing the transmitting/receiving near the location of the NFC antenna;
- picking up (10) the first radio signal sent out by the first terminal according to a first communications format;
- carrying out (20) a conversion of this first signal into a second signal, according to the second communications format; and
- transmitting (30) this second signal to the second terminal.
